# EUROPÄISCHE PATENTANMELDUNG

(11) **EP 0 836 084 A1**
(43) Veröffentlichungstag der Anmeldung: **15.04.1998**
(21) Anmeldenummer: 97116413.2
(22) Anmeldetag: 20.09.1997
(51) Int. Cl.: G01K 1/02

(54) **Verfahren und Vorrichtung zur berührungslosen Temperaturmessung**

(30) Priorität: 12.10.1996 DE 19642135
(71) Anmelder: IMPAC Electronic GmbH, 60326 Frankfurt/Main (DE)
(72) Erfinder: Breternitz, Rolf, 61348 Bad Homburg (DE); Herwig, Thomas, 65343 Eltville (DE); Holger, Pauly, 61449 Steinbach (DE); Schiewe, Christian, Dr., 01187 Dresden (DE); Tzschaschel, Claus-Peter, 39130 Magdeburg (DE)
(74) Vertreter: Weber, Dieter, Dr.

(57) **Zusammenfassung**

Die vorliegende Erfindung betrifft ein Verfahren zur berührungslosen Temperaturmessung, bei welchem die Temperatur eines Gegenstandes bzw. eines Wärmestrahlung abgebenden Bereiches mit einem Sensor erfaßt und in einem Speicher gespeichert wird, und eine entsprechende Vorrichtung mit einem Sensor und einer Sensorelektronik zur Erfassung der für eine Temperatur bzw. einen Temperaturbereich charakteristischen, elektromagnetischen Strahlung und mit einem Datenspeicher zum Zwischenspeichern der erfaßten Temperatur- bzw. Strahlungswerte. Um ein Verfahren und eine Vorrichtung mit den eingangs genannten Merkmalen zu schaffen, welche auch bei umfangreicheren Meßserien die korrekte Zuordnung von Temperaturmeßwerten und Meßpunkten bzw. Meßorten oder -gegenständen erleichtern und Fehlzuordnungen vollständig oder zumindest weitgehend ausschließen, wird erfindungsgemäß vorgeschlagen, daß neben den Temperaturdaten auch Informationsdaten über den Ort bzw. Gegenstand der Temperaturmessung in der Weise erfaßt und gespeichert werden, daß die gespeicherten Temperaturwerte eindeutig den gemessenen Gegenständen bzw. Orten zugeordnet werden können und daß für die Vorrichtung eine Einrichtung zur Eingabe und/oder automatischen Erfassung von Daten über den Ort oder Gegenstand der Temperaturmessung vorgesehen ist, welche in demselben oder einem anderen Speicher in der Weise zwischengespeichert werden, daß die Temperatur- und die Orts- bzw. Gegenstandsdaten in eindeutiger Weise einander zugeordnet werden können.

## Beschreibung

Die vorliegende Erfindung betrifft ein Verfahren und eine Vorrichtung zur berührungslosen Temperaturmessung, wobei mit einem entsprechenden Verfahren die Temperatur eines Gegenstandes bzw. eines Wärmestrahlung abgebenden Bereiches oder Ortes mit einem Sensor erfaßt und in einem Speicher gespeichert wird. Dabei können entweder die Rohdaten der Temperaturmessung, also z. B. das elektromagnetische Strahlungsspektrum mit der Strahlungsintensität bei vorgegebenen Wellenlängen, oder aber die daraus bereits errechneten Temperaturwerte als solche gespeichert werden.

Die entsprechende Vorrichtung hat einen Sensor und eine Sensorelektronik zur Erfassung der für eine Temperatur bzw. einen Temperaturbereich charakteristischen elektromagnetischen Strahlung und einen Datenspeicher, um die erfaßten Strahlungs- bzw. Temperaturwerte abzuspeichern. Derartige Verfahren und Vorrichtungen haben inzwischen weite Verbreitung gefunden. In sehr vielen industriellen Prozessen ist die genaue Kenntnis der Temperaturen zu bestimmten Zeitpunkten oder an bestimmten Verarbeitungs- oder Herstellungsorten für den Erfolg eines Herstellungs- oder Verarbeitungsverfahrens von erheblicher Bedeutung. Dabei können in vielen Fällen Kontaktthermometer, die in unmittelbarer Berührung mit Gegenständen stehen und deren Temperatur über Wärmeleitung annehmen, nicht verwendet werden. Dies gilt insbesondere im Falle sehr hoher Temperaturen und bei Gegenständen mit harter Oberfläche und schlechter Wärmeleitung, bei welchen im Gegensatz zu beispielsweise Flüssigkeiten eine Wärmeübertragung auf ein Kontaktthermometer sehr schlecht wäre. Berührungslose Temperaturmeßgeräte werden z. B. in der Lebensmittelindustrie und hier insbesondere in Kühlhäusern oder auch beim Transport in Kühltransportern verwendet, um die Einhaltung vorgeschriebener Temperaturgrenzen zu überwachen bzw. zu kontrollieren. Ein Anwendungsbeispiel für hohe Temperaturen liefert die Herstellung von Koks in einer Kokerei, wo eine Koksofendecke begangen wird und die Temperaturen der matrixartig angeordneten Heizzüge von oben gemessen werden. Dabei können jedoch jeweils nur die Heizzüge gemessen werden, die gerade nicht befeuert werden. In einem solchen Fall stellt sich das Problem, daß eine größere Serie von Temperaturmeßwerten, die der Reihe nach in verschiedenen Heizzügen aufgenommen wurden, später exakt den betreffenden Heizzügen zugeordnet wird. Den Kokereien dient eine solche Temperaturkontrolle zur Optimierung des Herstellungsprozesses hinsichtlich Ausbeute und Energieverbrauch.

Im Lebensmittelbereich ist darüber hinaus auch aus hygienischen Gründen eine Temperaturmessung in Kontakt mit einem Thermometer unerwünscht. Auch dort, wie z. B in den erwähnten Kühlhäusern, tritt das bereits angesprochen Problem auf, daß bei einer ganzen Serie nacheinander aufgenommener Temperaturwerte diese im Anschluß wieder den richtigen Meßstellen zugeordnet werden müssen.

Bei entsprechenden Anwendungsfällen geht man deshalb im Regelfall nach einem festen Schema vor und nimmt in einer vorgegebenen Reihenfolge die einzelnen Temperaturmeßwerte auf, wobei sich aus dieser Reihenfolge die Zuordnung zu den einzelnen Meßpunkten ergibt. Wenn sich dann allerdings herausstellt, daß die Reihenfolge nicht eingehalten wurde oder aber daß einer der Meßwerte fehlt, so läßt sich im Nachhinein mitunter weder die richtige Reihenfolge noch der fehlende Meßwert rekonstruieren, und die Messung muß erneut durchgeführt werden, wobei jedoch Daten unwiderbringlich verloren sind, wenn es dabei auf den Zeitpunkt der Messung ankam.

Gegenüber diesem Stand der Technik liegt der vorliegenden Erfindung die Aufgabe zugrunde, ein Verfahren und eine Vorrichtung mit den eingangs genannten Merkmalen zu schaffen, welche auch bei umfangreicheren Meßserien die korrekte Zuordnung von Temperaturmeßwerten und Meßpunkten bzw. Meßorten oder -gegenständen erleichtern und Fehlzuordnungen vollständig oder zumindest weitgehend ausschließen.

Hinsichtlich des eingangs genannten Verfahrens wird diese Aufgabe dadurch gelöst, daß neben dem Temperaturwert auch Daten über den Ort bzw. Gegenstand der Temperaturmessung in der Weise erfaßt und gespeichert werden, daß die gespeicherten Temperaturwerte eindeutig den gemessenen Gegenständen bzw. Orten zugeordnet werden können. Konkret findet also im Zusammenhang mit einer Temperaturmessung immer auch eine Erfassung und Registrierung des Ortes statt, an welchem diese Messung vorgenommen wurde. Da sowohl die Daten über den Ort als auch diejenigen über die Temperatur abgespeichert werden, ist diese Abspeicherung mit Hilfe eines geeigneten Programms, welches die Speicherung steuert, problemlos in der Weise möglich, daß die Zuordnung zwischen den gespeicherten Daten eindeutig ist.

Dabei ist insbesondere ein Verfahren gemäß der vorliegenden Erfindung bevorzugt, bei welchem die Daten über den Ort bzw. Gegenstand der Temperaturmessung in Form eines Strichcodes bzw. Bar-Codes vorgegeben werden, was die apparative Datenerfassung erleichtert.

Derartige Strichcodierungen oder auch Bar-Codes haben inzwischen eine weite Verbreitung gefunden und werden inzwischen fast überall in Warenhäusern verwendet, um beim Verkauf von Waren mit Hilfe der Strichcodierung automatisch den konkreten Gegenstand und auch seinen Preis zu erfassen, so daß nicht nur der Kassiervorgang einfacher wird, sondern z. B. auch die ausgedruckten Quittungen gleichzeitig auch den betreffenden Gegenstand angeben können und vor allem die Verwaltung des Lagerbestandes an Waren erheblich einfacher wird, da auf diese Weise der aktuelle Warenbestand automatisch erfaßt bzw. korrigiert werden kann.

Es versteht sichm, daß derartige Strichcodierungen ebenso für die Definition und eindeutige Identifizierung von Meßpunkten bei berührungslosen Temperaturmessungen verwendet werden können. Um beispielsweise Temperaturmessungen in einem Kühlhaus durchzuführen, können an den einzelnen Regalen oder Regalfächern in dem Kühlhaus oder an den gekühlten Gegenständen, im allgemeinen tiefgefrorenen Lebensmitteln, entsprechende Strichcodemarkierungen angebracht sein, die vor oder während einer Temperaturmessung mit einem entsprechenden Strichcodelesegerät angepeilt werden, wobei der erfaßte Strichcode in Zuordnung zu dem unmittelbar vorher oder unmittelbar danach erfaßten Temperaturwert abgespeichert wird. Generell sind also die Strichcodes vorzugsweise am oder in der Nähe des zu messenden Gegenstandes bzw. Ortes angebracht.

In einer alternativen Ausgestaltung des erfindungsgemäßen Verfahrens kann der zu einem Ort oder Gegenstand gehörige Strichcode in Form einer Liste oder Tabelle mitgeführt werden. In diesem Fall sollte allerdings die Liste eine eindeutige Zuordnung der Strichcodes zu den Meßpunkten haben, indem beispielsweise entsprechende Regalfächer durchnumeriert sind, wobei beim Messen der Temperatur entweder vorher oder nachher der zugehörige Strichcode ebenfalls eingelesen wird und zusammen mit dem Temperaturwert abgespeichert wird.

Gegebenenfalls kann ein Strichcode auch einer Serie von Meßstellen zugeordnet werden, wenn beispielsweise in einem Regal gelagerte Gegenstände zu messen sind und das betreffende Regal fünf Fächer hat, so könnte ein einziger Strichcode für das gesamte Regal vorgesehen sein, und die Meßpunkte werden dann in einer vorgegebenen Reihenfolge aufgenommen, so daß auch auf diese Weise eine eindeutige Zuordnung zu den einzelnen Fächern möglich ist.

Darüber hinaus sollten sowohl die Temperaturwerte als auch die Informationsdaten über den Meßpunkt bzw. Ort der Messung in einer Form gespeichert werden, welche die Übertragung und weitere Verarbeitung auf einen PC oder einen sonstigen Elektronenrechner ermöglicht. Dies gilt insbesondere, wenn Temperaturverläufe über längere Zeit erfaßt und protokolliert werden sollen oder aber die Daten archiviert werden müssen. Auch zur Steuerung und Optimierung von Prozeßparametern kann selbstverständlich die genaue Auswertung und Verarbeitung der Temperaturmeßwerte an bestimmten Orten mit einem entsprechenden Programm erforderlich sein, welches z. B. auf einem PC installiert ist.

In einer besonders bevorzugten Ausführungsform der Erfindung wird neben den Temperaturmeßwerten und den Daten über den Ort der Temperaturmessung auch noch der Zeitpunkt registriert, zu welchem die Messung stattgefunden hat. Zu diesem Zweck wird vorzugsweise die Echtzeit gemessen, es kann jedoch auch zu Beginn der Messung eine nicht an die Tageszeit gekoppelte Stoppuhr oder dergleichen gestartet werden, wobei gegebenenfalls der Zeitpunkt des Starts der Stoppuhr registriert werden kann.

Die zusammen mit den Daten für den Ort und die Temperaturmessung registrierte Zeit ergibt eine zusätzliche Sicherheit bezüglich der Zuordnung der Wertepaare. In der bevorzugten Ausführungsform der Erfindung werden Meßwertpaare von Temperatur und Ort der Temperaturmessung dadurch erzeugt bzw. in der Weise erfaßt, daß eine erste Messung eines Strichcodes oder aber einer Temperatur ein Zeifenster für die Messung der jeweils anderen Meßgröße öffnet, wobei ein innerhalb dieses Zeitfensters erfaßter Meßwert der Temperatur oder eines Strichcodes dem vorherigen Meßwert eines Strichcodes oder einer Temperatur zugeordnet werden. Zweckmäßiger-weise wird nach der Erfassung der zweiten Messung das Fenster wieder geschlossen, wobei außerdem zweckmäßigeweise noch entsprechende Schalteinrichtungen vorgesehen sind, welche für den Fall, daß zuerst ein Strichcode gemessen wird, anschließend nur noch eine Temperaturmessung innerhalb des Zeifensters zulassen und umgekehrt, falls die Temperaturmessung zuerst erfolgt ist, anschließend nur noch eine Strichcodemessung zulassen. Dabei ist es außerdem zweckmäßig, wenn die Öffnung des Zeitfensters durch geeignete Einrichtungen angezeigt wird. So kann beispielsweise nach der erfolgten Messung eines Strichcodes eine Leuchtdiode aufleuchten, die die Öffnung des Zeitfensters für die Messung der Temperatur anzeigt. Der Benutzer kann dann innerhalb des Zeitfensters die Temperatur messen, wobei nach dem Registrieren und Speichern der gemessenen Temperatur die Leuchtdiode erlischt und damit anzeigt, daß das Zeitfenster für eine weitere Temperaturmessung geschlossen ist.

Außerdem kann bei einer solchen Ausgestaltung des erfindungsgemäßen Verfahrens noch vorgesehen werden, daß nach dem Schließen eines Zeitfensters weitere Messungen für eine Pausenzeit blockiert werden, wobei die Pausenzeit größer ist als das maximale Zeitfenster. Aus den dann zu jedem Meßwert eines Strichcodes und einer Temperatur gleichzeitig gespeicherten Zeitpunkten kann man dann eindeutig die Zusammengehörigkeit von Strichcode- und Temperaturmessungen ablesen, da nur diese innerhalb eines Zeitfensters aufeinander folgen, welches kürzer ist als die Pausen zwischen der Aufnahme von Meßwertpaaren. Es gehören also immer diejenigen Strichcodewerte und Temperaturwerte zusammen, deren zeitlicher Abstand kleiner ist als das maximale Zeitfenster und damit kleiner als die Zeitpausen zwischen den Fenstern. In einem solchen Fall kommt es also nicht darauf an, ob zuerst der Strichcode oder zuerst die Temperatur gemessen wird.

Besonders bevorzugt ist dabei eine Ausgestaltung des erfindungsgemäßen Verfahrens, bei welchem die Länge des Zeitfensters und/oder der jeweiligen Pausenzeiten einstellbar ist. Dabei kann es jedoch auch ausreichen, lediglich die maximale Länge des Zeitfensters einzustellen, während die Pausenzeit automatisch angepaßt wird, indem sie z. B. immer eine oder zwei Sekunden länger ist als die jeweils eingestellte Maximaldauer der Zeitfensteröffnung.

Hinsichtlich der Vorrichtung wird die der Erfindung zugrundeliegende Aufgabe dadurch gelöst, daß eine Einrichtung zur Eingabe und/oder automatischen Erfassung von Daten über den Ort oder Gegenstand der Temperaturmessung vorgesehen ist, wobei die Einrichtung diese Daten in denselben oder auch einen weiteren Speicher in der Weise eingibt, daß die Temperaturen und die Orts- bzw. Gegenstandsdaten in eindeutiger Weise einander zuordbar sind.

Zweckmäßigerweise ist die erfindungsgemäße Vorrichtung als ein in der Hand zu haltendes Pyrometer ausgebildet. Ein solches Pyrometer kann in einfacher Weise auf einen Gegenstand gerichtet werden, dessen Temperatur zu messen ist und erfaßt und registriert die Temperatur auf knopfdruck.

Dabei ist es besonders bevorzugt, wenn das Pyrometer bereits einen integrierten Strichcodeleser aufweist, wobei es wiederum besonders zweckmäßig ist, wenn dieser Strichcodeleser einen Laser aufweist, welcher derart angeordnet ist, daß er auch als Pilotlicht für die Temperaturmessung verwendbar ist. Der Laser kann also z. B. einen Lichtpunkt auf einem Gegenstand erzeugen, und ein Lesegerät kann einen Strichcode erfassen, wenn der Lichtpunkt über diesen Strichcode hinweggeführt wird. Gleichzeitig kann derselbe Lichtpunkt jedoch auch als Pilotlicht verwendet werden, wenn der Laser so ausgerichtet ist, daß er genau den Punkt beleuchtet, welcher von der Pyrometeroptik erfaßt wird. Es versteht sich, daß das Pilotlicht während einer Temperaturmessung möglichst nicht den betreffenden Punkt beleuchten sollte oder allenfalls sehr kurz aufblitzen sollte.

Außerdem können gegebenenfalls verschiedene Betriebsarten für den Laser vorgesehen sein, der z. B. für eine Strichcodemessung mit Hilfe einer Ablenkoptik über einen Strichcode hinweggeführt werden kann, während er bei der Verwendung als Pilotlicht eine feste relative Ausrichtung zu dem Pyrometer hat.

Alternativ kann der Laser auch mit Hilfe eines Griffels über den Strichcode hinweg geführt werden oder das gesamte Gerät mit dem darin (starr) installierten Laser wird üder den Strichcode hinweg geführt oder verschwenkt, bis der Strichcodeleser den Strichcode erfaßt hat.

Der Strichcodeleser kann aber auch als von dem Temperaturmeßteil separiertes Gerät ausgebildet sein, wobei dann selbstverständlich Einrichtungen für die Datenübertragung zwischen Pyrometer bzw. Speicher und dem Strichcodeleser vorgesehen sind. Im einfachsten Fall sind Pyrometer und Strichcodeleser über ein Kabel miteinander verbunden. Die Datenübertragung kann aber auch drahtlos, z. B. über Infrarotstrahlung oder eine Funkstrecke erfolgen.

Besonders bevorzugt ist eine Ausführungsform der Erfindung, bei welcher entweder in dem Pyrometer oder aber in dem Strichcodeleser eine Echtzeituhr integriert ist, welche den jeweiligen Daten einer Temperaturmessung und einer Strichcodemessung auch jeweils die Meßzeit zuordnet. Zweckmäßigerweise ist dabei auch eine Schaltung für die Bereitstellung eines Zeitfensters für je zwei aufeinanderfolgende Messungen und für die Blockierung von Messungen vorgesehen, nachdem zwei Meßwerte für Temperatur und Strichcode aufgenommen wurden. Eine entsprechende Schaltung realisiert die oben bereits beschriebenen Verfahrensmerkmale.

Weitere Vorteile, Merkmale und Anwendungsmöglichkeiten der vorliegenden Erfindung ergeben sich aus der folgenden Beschreibung eines Ausführungsbeispieles und der dazugehörigen Figur.

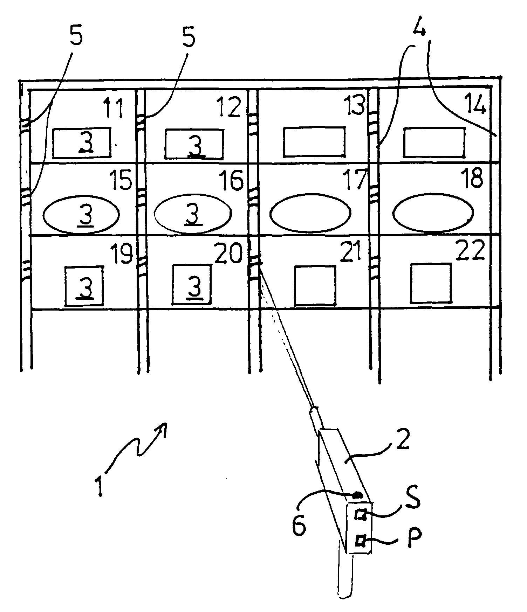

Die einzige Figur zeigt schematisch den Meßvorgang mit Hilfe eines erfindungsgemäßen Pyrometers.

Man erkennt in der Figur ein Regal 1 mit insgesamt zwölf Fächern, die z. B. von 11 bis 22 durchnumeriert sein können. Mit Hilfe eines Pyrometers 2 soll die Temperatur der einzelnen, mit der Bezugsziffer 3 bezeichneten Gegenstände erfaßt werden. In das Pyrometer 2 ist ein Strichcodeleser integriert, und die Holme 4 des Regales 1 weisen jeweils links von jedem der Fächer einen hier jeweils mit der Bezugszahl 5 angezeigten Strichcode auf, wobei es sich versteht, daß die Strichcodes für die verschiedenen Fächer sich unterscheiden und auf diese Weise auch über die Strichcodes eine eindeutige Zuordnung zu dem zugehörigen Fach und dem darin befindlichen Gegenstand 3 ermöglichen. Das Pyrometer kann z. B. zwei Schalter oder Taster S, P aufweisen, von denen einer den Strichcodeleser betätigt, während der andere die Temperaturmeßelektronik in Betrieb setzt. Strichcodeleser und Pyrometer können eine gemeinsame Optik haben, die Optiken können jedoch auch getrennt sein, sind aber, für den Fall, daß der Strichcodeleser in das Pyrometer integriert ist, wie in der Figur dargestellt, relativ dicht nebeneinander und parallel zueinander ausgerichtet, so daß sie jeweils im wesentlichen das gleiche oder zumindest ein stark überlappendes Meßfeld haben. Dementsprechend wird z. B. die Optik des Pyrometers zuerst auf einen Strichcode 5 gerichtet und dabei der Strichcodetaster S betätigt. Sobald der Strichcodeleser einen Strichcode erkannt und an einen Speicher weitergegeben hat, leuchtet eine Leuchtdiode 6 auf, die die Öffnung eines Zeitfensters für eine Temperaturmessung anzeigt. Die Pyrometeroptik wird dann auf den Gegenstand 3 in dem Fach rechts neben dem gerade gelesenen Strichcode 5 gerichtet, und es wird nunmehr der Temperaturtaster P am Pyrometer betätigt, welcher die Sensorelektronik einschaltet. Sobald eine Temperatur erfaßt und an den Speicher weitergegeben worden ist, erlischt die Leuchtdiode 6. Die Leuchtdiode 6 erlischt selbstverständlich auch nach dem Ende des Meßzeitfensters, wenn in der Zwischenzeit keine Temperaturmessung vorgenommen wurde, falls jedoch eine Temperaturmessung vor dem Ende des Meßzeitfensters begonnen wurde, bleibt dieses solange geöffnet, bis die Temperatur ordnungsgemäß registriert worden ist.

Wenn zu einem Strichcode keine Temperatur erfaßt wurde, so wird auch diese Tatsache in Form einer standardisierten Speichereingabe registriert.

Die Bedienperson peilt also nacheinander Strichcode und den rechts neben einem Strichcode befindlichen Gegenstand an, und führt dies, falls erforderlich, für jedes der zwölf Reglfächer 11 bis 22 durch, gegebenenfalls können jedoch auch nur stichprobenartig Messungen in einigen der Regalfächer erfolgen.

Gleichzeitig mit den Meßwerten wird auch die entsprechende Meßzeit erfaßt, wobei außerdem vorgesehen werden kann, daß zwischen den Messungen verschiedener Regalfächer immer ein größerer Zeitabstand liegt als zwischen einer Strichcodemessung und einer Temperaturmessung in dem zugehörigen Fach.

Die zwischengespeicherten Werte werden dann über eine geeignete Schnittstelle an einen PC übertragen, wobei ein Auswerteprogramm die gemessenen Daten verarbeitet und gegebenenfalls Hinweise auf eine Änderung der Lagerparameter gibt.

## Patentansprüche

1. Verfahren zur berührungslosen Temperaturmessung, bei welchem die Temperatur eines Gegenstandes bzw. eines Wärmestrahlung abgebenden Bereiches mit einem Sensor erfaßt und in einem Speicher gespeichert wird, **dadurch gekennzeichnet**, daß neben den Temperaturdaten auch Informationsdaten über den Ort bzw. Gegenstand der Temperaturmessung in der Weise erfaßt und gespeichert werden, daß die gespeicherten Temperaturwerte eindeutig den gemessenen Gegenständen bzw. Orten zugeordnet werden können.

2. Verfahren nach Anspruch 1, **dadurch gekennzeichnet**, daß die Daten Ober die Orte bzw. Gegenstände in Form eines Strichcodes vorgesehen werden.

3. Verfahren nach Anspruch 2, **dadurch gekennzeichnet**, daß ein Strichcode am oder in der Nähe eines zu vermessenden Gegenstandes bzw. Ortes angebracht wird.

4. Verfahren nach Anspruch 2, **dadurch gekennzeichnet**, daß Strichcodes auf einer mitgeführten Liste oder dergleichen bereitgehalten werden.

5. Verfahren nach einem der Ansprüche 2 bis 4, **dadurch gekennzeichnet**, daß ein Strichcode mehrere Meßstellen in einer vorgegebenen Reihenfolge definiert.

6. Verfahren nach einem der Ansprüche 1 bis 5, **dadurch gekennzeichnet**, daß die Temperaturwerte und die Orts- bzw. Gegenstandsdaten in einer Form gespeichert werden, welche die Übertragung und die Weiterverarbeitung auf einem PC oder sonstigen Elektronenrechner erlaubt.

7. Verfahren nach einem der Ansprüche 1 bis 6, **dadurch gekennzeichnet**, daß zusätzliche Zeitdaten mit Hilfe einer Zeitmesseinrichtung, vorzugsweise einer Echtzeituhr, gespeichert werden, wobei die Meßzeitdaten den jeweiligen Daten der Temperatur und des Ortes der Messung zugeordnet werden.

8. Verfahren nach Anspruch 7, **dadurch gekennzeichnet**, daß aus Temperaturwert und Ortsdaten, z. B. einer Strichcodemessung, bestehende Meßwertpaare dadurch erzeugt werden, daß eine erste Erfassung eines Strichcodes oder einer Temperatur ein Zeitfenster für die Messung der jeweils anderen Meßgröße Temperatur bzw. Strichcode öffnet, wobei die innerhalb des Zeitfensters registrierten Meßwerte einander zugeordnet werden.

9. Verfahren nach Anspruch 8, **dadurch gekennzeichnet**, daß nach der Erfassung der zweiten Messung das Zeitfenster geschlossen wird.

10. Verfahren nach Anspruch 8 oder 9, **dadurch gekennzeichnet**, daß die Öffnung des Zeitfensters durch eine Anzeigevorrichtung, wie z. B. eine Leuchtdiode, angezeigt wird.

11. Verfahren nach einem der Ansprüche 8 bis 10, **dadurch gekennzeichnet**, daß nach einer Meßwerterfassung eines Paares von Meßwerten eine weitere Messung für eine Pausenzeit blockiert wird, die größer ist als das maximale Zeitfenster.

12. Verfahren nach einem der Ansprüche 8 bis 11, **dadurch gekennzeichnet**, daß die Länge des Zeitfensters sowie die Länge einer gegebenenfalls vorgebbaren Zeitpause zwischen Zeitfenstern einstellbar ist.

13. Vorrichtung zur berührungslosen Temperaturmessung mit einem Sensor und einer Sensorelektronik zur Erfassung der für eine Temperatur bzw. einen Temperaturbereich charakteristischen, elektromagnetischen Strahlung und mit einem Datenspeicher zum Zwischenspeichern der erfaßten Temperatur- bzw. Strahlungswerte, **dadurch gekennzeichnet**, daß eine Einrichtung zur Eingabe und/oder automatischen Erfassung von Daten über den Ort oder Gegenstand der Temperaturmessung vorgesehen ist, welche in demselben oder einem anderen Speicher in der Weise zwischengespeichert werden, daß die Temperatur- und die Orts- bzw. Gegenstandsdaten in eindeutiger Weise einander zugeordnet werden können.

14. Vorrichtung nach Anspruch 13, **dadurch gekennzeichnet**, daß sie als ein in der Hand zu haltendes Pyrometer ausgebildet ist.

15. Vorrichtung nach Anspruch 13 oder 14, **dadurch gekennzeichnet**, daß sie einen integrierten Strichcodeleser ausweist.

16. Vorrichtung nach Anspruch 15, **dadurch gekennzeichnet**, daß der Strichcodeleser mit einem Laser ausgestattet ist, welcher derart angeordnet ist, daß er auch als Pilotlicht für die Temperaturmessung verwendbar ist.

17. Vorrichtung nach einem der Ansprüche 14 bis 16, **dadurch gekennzeichnet**, daß der Strichcodeleser als von dem Temperaturmeßteil separates Gerät ausgebildet ist, wobei Einrichtungen zur Datenübertragung zwischen dem Pyrometer und dem Strichcodeleser vorgesehen sind.

18. Vorrichtung nach Anspruch 17, **dadurch gekennzeichnet**, daß Temperaturmeßteil und Strichcodeleser über ein Kabel miteinander verbunden sind.

19. Vorrichtung nach einem der Ansprüche 13 bis 18, **dadurch gekennzeichnet**, daß sie eine Zeitmeßeinrichtung, insbesondere eine Echtzeituhr, aufweist.

20. Vorrichtung nach Anspruch 19, **dadurch gekennzeichnet**, daß sie eine Einrichtung zur Bereitstellung eines Zeitfensters für je zwei aufeinanderfolgende Messungen von Temperatur und Strichcode, bzw. umgekehrt, aufweist.
